# EUROPEAN PATENT APPLICATION

(11) **EP 4 376 502 A1**
(43) Date of publication of application: **29.05.2024**
(21) Application number: 22208836.1
(22) Date of filing: 22.11.2022
(51) Int. Cl.: H04W 52/36, G06F 1/16

(54) **DEVICES AND METHODS FOR SWITCHING ANTENNA TRANSMISSION POWER MODES**

(71) Applicant: INTEL Corporation, Santa Clara, CA 95054 (US)
(72) Inventor: HANCHATE, Mallari, 586103 Bangalore KA (IN); GUPTA, Sagar, 201002 Ghaziabad, Uttar Pradesh (IN); HEGDE, Mythili, 560078 Bangalore KA (IN); THAKUR, Jayprakash, 560035 Bangalore KA (IN); K, Tarakesava Reddy, 500090 Hyderabad, Telangana (IN)
(74) Representative: Viering, Jentschura & Partner mbB Patent- und Rechtsanwälte

(57) **Abstract**

Devices and methods for providing antenna power management control that includes: determining whether there is human presence near a transmit antenna based on image information from a camera and/or based on touch information from one or more touch sensors; and determining a transmission power mode of the transmit antenna based on whether human presence is detected, wherein the transmission power mode enters a high throughput mode including maximum transmit antenna power when no human presence is determined.

## Description

### Technical Field

Various aspects generally relating to transmit power control techniques for regulating radiation exposure in wireless communications.

### Background

New communication technologies, such as 5G New Radio (NR), WiGig, and Wireless Local Area Networks (WLANs) such as WiFi, utilize higher radio frequencies in the millimeter wave (mmWave) spectrum and utilize beamforming to improve throughput and reduce frequency with existing wireless systems. While these techniques provide many advantages in these newer wireless systems, they may increase radio frequency (RF) radiation in the environment, including to users. For example, when a device uses beamforming to focus high RF transmissions in a narrow direction, the resulting beam may deliver elevated levels of radiation energy to a focused area. When this focused area is pointed at a user, the device may deliver high levels of harmful radiation to the user and the signal quality may also be significantly degraded. The amount of radiation energy emitted absorbed by a unit of mass of a user over time may be defined as the specific absorption rate (SAR).

Various regulators, including the Federal Communications Commission (FCC) and the International Commission on Non-Ionizing Radiation Protection (ICNIRP), and standardization bodies like the 3^{rd} Generation Partnership Project (3GPP) have introduced SAR measures that limit the amount of radiation that a device can deliver to users. In response, methods and devices that implement time-averaging SAR (TAS) mechanisms have been introduced to comply with these regulatory measures.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. **1** exemplarily shows a radio communication network according to some aspects;
FIG. **2** exemplarily shows an internal configuration of terminal device according to some aspects;
FIG. **3** exemplarily shows an internal configuration of a network access node in some aspects;
FIG. **4** exemplarily illustrates a wireless display device according to various examples of the present disclosure;
FIG. **5** exemplarily illustrates an antenna system floor plan for the wireless display device according to various examples of the present disclosure;
FIG. **6** exemplarily illustrates a schematic view and a block diagram view of an antenna system floor plan for a wireless display device with a wide bezel design including proximity sensors;
FIGS. **7A, 7B** exemplarily illustrate proximity detection based on image information according to some examples of the present disclosure;
FIGS. **8A, 8B** exemplarily illustrate a proximity detection based on touch information according to some examples of the present disclosure;
FIG. **9** exemplarily shows an arrangement of a non-active area of a touch screen panel according to some examples of the present disclosure;
FIG. **10** exemplarily illustrates an arrangement of a non-active area of a touch screen panel according to some examples of the present disclosure;
FIG. **11** exemplarily illustrates a flow chart for detecting human proximity using visual information;
FIG. **12** exemplarily illustrates a flow chart for detecting human proximity using touch information;
FIG. **13** exemplarily illustrates a flow chart for detecting human proximity using touch and visual information; and
FIG. **14** exemplarily illustrates a flow chart for detecting human proximity using image and/or touch information.

### Description

The form factor of wireless display devices plays a vital role in display and antenna design. In wide bezel designs, capacitive Specific Absorption Rate (SAR) proximity sensors are placed near antennas in the bezel and when human proximity to an antenna is detected by a SAR sensor, the SAR sensor signals a controller to reduce the transmission power of the antenna to comply with regulatory RF exposure requirements. However, as display designs tend toward sleek, thin, narrow bezel or edge-to-edge (e.g., infinity) screens, antenna design becomes more complicated because there is no space in the bezel for placing both antennas and capacitive SAR proximity sensors. In existing narrow bezel designs, instead of reducing antenna transmission power when human proximity to the antenna is detected (e.g., instantaneous adjustments), many narrow bezel devices employ a Time Averaged SAR (TAS) mechanism (e.g., a software based algorithm) to limit the antenna transmission power to comply with regulatory RF exposure requirements. For example, to meet FCC regulatory requirements for antenna transmittance power, a Time Averaged Specific Absorption Rate (SAR) algorithm can reduce antenna transmission power in regular intervals.

TAS mechanisms monitor and regulate the power used in transmissions over a time period (e.g., an averaging window) in order to comply with regulations issued by authorities and may include utilizing a transmission power energy budget available over the time period to ensure that regulatory SAR limits are not exceeded. Devices may be configured to control the transmission (Tx) power by applying a power back-off (PBO) that limits the Tx power to lower levels or by applying a time back-off (TBO) that prevents transmissions for a certain period of time.

More specifically, conventional TAS algorithms and schemes aggregate transmission power over a time period to regulate the total energy transmitted during the time period to comply with regulations set forth by governing bodies that are intended to limit the amount of radiation exposure to users. These conventional TAS mechanisms compare the amount of spent energy, or the average spent energy, to a TAS energy budget available for the time period. If the energy budget is nearly spent, or within certain margins, conventional TAS mechanisms may apply a back-off (BO) in the form of a PBO or a TBO. While each of these options has their share of advantages and disadvantages, such as differences in throughput, connection range, and latencies, conventional TAS mechanisms are configured to decide between using each of the two options (PBO vs TBO) and/or determine whether to alternate or use a combination of the two.

However, as wireless display devices are being designed to be used with detachable modules (e.g., detachable keyboards and docks), the user does not necessarily have to hold the wireless display device while using the wireless display device. In such usage scenario, in addition to appearance, a better user experience also plays a vital role. For example, when a wireless display device is used in handheld applications (e.g., casual use case) the screen size may be more important, however when the wireless display device is docked into a detachable keyboard (e.g., productivity use case), performance (e.g., a better wireless communication) may be more important. Better wireless communication may include lower latency, higher throughput, and/or more consistent connectivity.

The use of the TAS mechanism to limit the antenna transmission power in all usage scenarios is not efficient, especially when the user is not holding the wireless display device. For example, in a productivity use case, when the user is not close to the antenna because the user's hands are closer to the detachable keyboard and away from the antenna in the bezel, the TAS mechanism would nevertheless degrade antenna throughput by limiting antenna transmission power. In such case, performance would be unnecessarily sacrificed.

The present disclosure provides an innovative way to identify human presence proximate to an antenna without a proximity sensor by using image information and/or touch information to intelligently determine (e.g., switch) when and which antenna transmission power mode to use. For example, a determination may be based on image information from one or more always ON (e.g., active) cameras processed with a low power visual co-processor. A determination may be based on touch information from one or more touch inputs of a touch screen panel with a touch controller. A determination may be based on both image information and touch information. The antenna transmission power mode may include a TAS mode (e.g., TAS mechanism at the lowest transmission power) and a normal mode (e.g., with no power back-off or maximum transmission power, i.e., high throughput) and/or some reduced or intermediate throughput mode (e.g. some power back-off or moderate transmission power). In use scenarios where no one is near the antenna, TAS mode is not needed.

In this manner, the methods and devices provided herein are better able to regulate antenna transmission power and provide numerous advantages in wireless communications systems.

In some aspects, methods and devices are configured to determine human presence near a transmit antenna (without using proximity SAR sensors) based on image information and/or touch information. The methods and devices provide additional modes for regulating, controlling or limiting antenna transmission power in addition to using the TAS mechanism. Accordingly, by taking human proximity to a transmission antenna into account even without a SAR proximity sensor, the methods and devices described herein may intelligently switch from the TAS mode to a mode with a higher transmission power when human proximity is not detected by image recognition and/or touch/hover/grip recognition.

The methods and devices of this disclosure provide numerous advantages, including (but not limited to): reducing material cost because existing components are reused, simplifying routing and interconnect design, not increasing design footprint, allowing transmission at normal high power levels while complying with SAR regulatory constraints; maximizing transmission throughput; reducing latencies; and improving connection range.

The following detailed description refers to the accompanying drawings that show, by way of illustration, specific details and aspects in which the disclosure may be practiced.

The word "exemplary" is used herein to mean "serving as an example, instance, or illustration". Any aspect or design described herein as "exemplary" is not necessarily to be construed as preferred or advantageous over other aspects or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one. The terms "proper subset", "reduced subset", and "lesser subset" refer to a subset of a set that is not equal to the set, i.e. a subset of a set that contains less elements than the set.

Any vector and/or matrix notation utilized herein is exemplary in nature and is employed solely for purposes of explanation. Accordingly, aspects of this disclosure accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

The term "terminal device" utilized herein refers to user-side devices (both portable and fixed) that can connect to a core network and/or external data networks via a radio access network. "Terminal device" can include any mobile or immobile wireless communication device, including User Equipment (UEs), Mobile Stations (MSs), Stations (STAs), cellular phones, tablets, laptops, personal computers, wearables, multimedia playback and other handheld or body-mounted electronic devices, consumer/home/office/commercial appliances, vehicles, and any other electronic device capable of user-side wireless communications. Without loss of generality, in some cases terminal devices can also include application-layer components, such as application processors or other general processing components that are directed to functionality other than wireless communications. Terminal devices can optionally support wired communications in addition to wireless communications. Furthermore, terminal devices can include vehicular communication devices that function as terminal devices.

The term "network access node" as utilized herein refers to a network-side device that provides a radio access network with which terminal devices can connect and exchange information with a core network and/or external data networks through the network access node. "Network access nodes" can include any type of base station or access point, including macro base stations, micro base stations, NodeBs, evolved NodeBs (eNBs), Home base stations, Remote Radio Heads (RRHs), relay points, Wireless Local Area Network (WLAN) Access Points (APs), Bluetooth master devices, DSRC RSUs, terminal devices acting as network access nodes, and any other electronic device capable of network-side wireless communications, including both immobile and mobile devices (e.g., vehicular network access nodes, moving cells, and other movable network access nodes). As used herein, a "cell" in the context of telecommunications may be understood as a sector served by a network access node. Accordingly, a cell may be a set of geographically co-located antennas that correspond to a particular sectorization of a network access node. A network access node can thus serve one or more cells (or sectors), where the cells are characterized by distinct communication channels. Furthermore, the term "cell" may be utilized to refer to any of a macrocell, microcell, femtocell, picocell, etc. Certain communication devices can act as both terminal devices and network access nodes, such as a terminal device that provides network connectivity for other terminal devices.

Various aspects of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. As used herein, a first radio communication technology may be different from a second radio communication technology if the first and second radio communication technologies are based on different communication standards.

Aspects described herein may use such radio communication technologies according to various spectrum management schemes, including, but not limited to, dedicated licensed spectrum, unlicensed spectrum, (licensed) shared spectrum (such as LSA, "Licensed Shared Access," in 2.3-2.4 GHz, 3.4-3.6 GHz, 3.6-3.8 GHz and further frequencies and SAS, "Spectrum Access System," in 3.55-3.7 GHz and further frequencies)., and may be use various spectrum bands including, but not limited to, IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 64 - 71 GHz, 71 - 76 GHz, 81 - 86 GHz and 92 - 94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, any band between 65.88 GHz and 71 GHz, bands currently allocated to automotive radar applications such as 76-81 GHz, and future bands including 94-300 GHz and above.

For purposes of this disclosure, radio communication technologies may be classified as one of a Short-Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications (GSM), Code Division Multiple Access 2000 (CDMA2000), Universal Mobile Telecommunications System (UMTS), Long Term Evolution (LTE), General Packet Radio Service (GPRS), Evolution-Data Optimized (EV-DO), Enhanced Data Rates for GSM Evolution (EDGE), High Speed Packet Access (HSPA; including High Speed Downlink Packet Access (HSDPA), High Speed Uplink Packet Access (HSUPA), HSDPA Plus (HSDPA+), and HSUPA Plus (HSUPA+)), Worldwide Interoperability for Microwave Access (WiMax) (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

The terms "radio communication network," "wireless network", "communication network," or the like, as utilized herein encompasses both an access section of a network (e.g., a radio access network (RAN) section) and a core section of a network (e.g., a core network section). The term "radio idle mode" or "radio idle state" used herein in reference to a terminal device refers to a radio control state in which the terminal device is not allocated at least one dedicated communication channel of a mobile communication network. The term "radio connected mode" or "radio connected state" used in reference to a terminal device refers to a radio control state in which the terminal device is allocated at least one dedicated uplink communication channel of a radio communication network.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" may encompass one or both of transmitting and receiving, i.e., unidirectional or bidirectional communication in one or both of the incoming and outgoing directions. The term "calculate" may encompass both 'direct' calculations via a mathematical expression/formula/relationship and 'indirect' calculations via lookup or hash tables and other array indexing or searching operations.

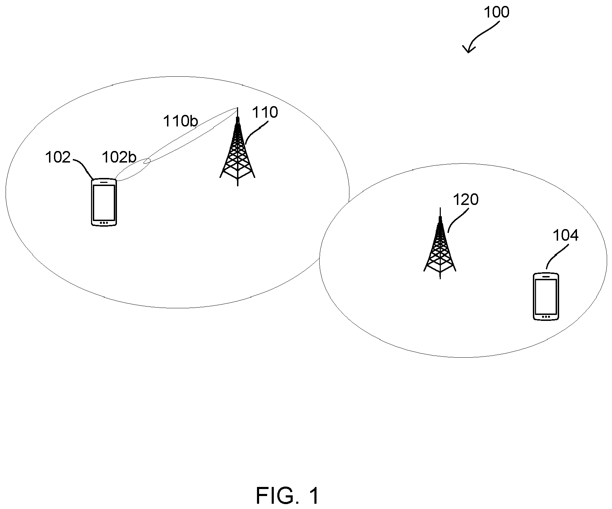

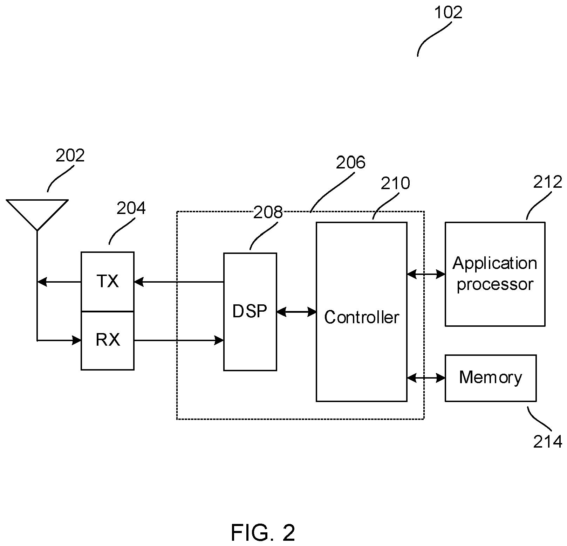

FIGs. **1** and **2** depict an exemplary network and device architecture for wireless communications. In particular, FIG. **1** shows exemplary radio communication network **100** according to some aspects, which may include terminal devices **102** and **104** and network access nodes **110** and **120.** Radio communication network **100** may communicate with terminal devices **102** and **104** via network access nodes **110** and **120** over a radio access network. Although certain examples described herein may refer to a particular radio access network context (e.g.,5G, NR, LTE, or other 3rd Generation Partnership Project (3GPP) networks, WLAN/WiFi, Bluetooth, mmWave, etc.), these examples are demonstrative and may therefore be readily applied to any other type or configuration of radio access network. The number of network access nodes and terminal devices in radio communication network **100** is exemplary and is scalable to any amount.

In an exemplary cellular context, network access nodes **110** and **120** may be base stations (e.g., eNodeBs, NodeBs, Base Transceiver Stations (BTSs), or any other type of base station), while terminal devices **102** and **104** may be cellular terminal devices (e.g., Mobile Stations (MSs), User Equipments (UEs), or any type of cellular terminal device). Network access nodes **110** and **120** may therefore interface (e.g., via backhaul interfaces) with a cellular core network such as an Evolved Packet Core (EPC, for LTE), Core Network (CN, for UMTS), or other cellular core networks, which may also be considered part of radio communication network **100.** The cellular core network may interface with one or more external data networks. In an exemplary short-range context, network access node **110** and **120** may be access points (APs, e.g., WLAN or WLAN APs), while terminal device **102** and **104** may be short range terminal devices (e.g., stations (STAs)). Network access nodes **110** and **120** may interface (e.g., via an internal or external router) with one or more external data networks.

Network access nodes **110** and **120** (and, optionally, other network access nodes of radio communication network **100** not explicitly shown in FIG. **1****)** may accordingly provide a radio access network to terminal devices **102** and **104** (and, optionally, other terminal devices of radio communication network **100** not explicitly shown in FIG. **1****).** In an exemplary cellular context, the radio access network provided by network access nodes **110** and **120** may enable terminal devices **102** and **104** to wirelessly access the core network via radio communications. The core network may provide switching, routing, and transmission, for traffic data related to terminal devices **102** and **104,** and may further provide access to various internal data networks (e.g., control nodes, routing nodes that transfer information between other terminal devices on radio communication network **100,** etc.) and external data networks (e.g., data networks providing voice, text, multimedia (audio, video, image), and other Internet and application data). In an exemplary short-range context, the radio access network provided by network access nodes **110** and **120** may provide access to internal data networks (e.g., for transferring data between terminal devices connected to radio communication network **100)** and external data networks (e.g., data networks providing voice, text, multimedia (audio, video, image), and other Internet and application data).

The radio access network and core network (if applicable, such as for a cellular context) of radio communication network **100** may be governed by communication protocols that can vary depending on the specifics of radio communication network **100.** Such communication protocols may define the scheduling, formatting, and routing of both user and control data traffic through radio communication network **100,** which includes the transmission and reception of such data through both the radio access and core network domains of radio communication network **100.** Accordingly, terminal devices **102** and **104** and network access nodes **110** and **120** may follow the defined communication protocols to transmit and receive data over the radio access network domain of radio communication network **100,** while the core network may follow the defined communication protocols to route data within and outside of the core network. Exemplary communication protocols include LTE, UMTS, GSM, WiMAX, Bluetooth, WLAN, mmWave, etc., any of which may be applicable to radio communication network **100.**

As shown in radio communication network **100,** terminal device **102** and network access node **110** may each use beamforming techniques **102b** and **110b,** respectively, for communicating with one another. Each may both have at least one RF chain and multi-antenna arrays. Accordingly, the devices shown in network **100** may be capable of bidirectional beamforming. If a user is in the direction of the beam **102b,** for example, the user may be subject to increased SAR levels. In order to comply with regulatory measures, terminal device **102** may need to implement TAS mechanisms so that the amount of energy transmitted in the direction of the user does not violate (i.e., go over) a TAS energy budget for a given period of time. However, in addition to complying with these regulatory measures, terminal device **102** must also attempt to maintain a robust wireless link with network access node **110** to ensure communication quality is not degraded.

FIG. **2** shows an internal configuration of terminal device **102** according to some aspects, which may include antenna system **202,** radio frequency (RF) transceiver **204,** baseband modem **206** (including digital signal processor **208** and protocol controller **210),** application processor **212,** and memory **214.** Although not explicitly shown in FIG. **2****,** in some aspects terminal device **102** may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device **102** may transmit and receive radio signals on one or more radio access networks. Baseband modem **206** may direct such communication functionality of terminal device **102** according to the communication protocols associated with each radio access network, and may execute control over antenna system **202** and RF transceiver **204** to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device **102** shown in FIG. **2** depicts only a single instance of such components.

Terminal device **102** may transmit and receive wireless signals with antenna system **202,** which may be a single antenna or an antenna array that includes multiple antennas. In some aspects, antenna system **202** may additionally include analog antenna combination and/or beamforming circuitry. In the receive (RX) path, RF transceiver **204** may receive analog radio frequency signals from antenna system **202** and perform analog and digital RF front-end processing on the analog radio frequency signals to produce digital baseband samples (e.g., In-Phase/Quadrature (IQ) samples) to provide to baseband modem **206.** RF transceiver **204** may include analog and digital reception components including amplifiers (e.g., Low Noise Amplifiers (LNAs)), filters, RF demodulators (e.g., RF IQ demodulators)), and analog-to-digital converters (ADCs), which RF transceiver **204** may utilize to convert the received radio frequency signals to digital baseband samples. In the transmit (TX) path, RF transceiver **204** may receive digital baseband samples from baseband modem **206** and perform analog and digital RF front-end processing on the digital baseband samples to produce analog radio frequency signals to provide to antenna system **202** for wireless transmission. RF transceiver **204** may thus include analog and digital transmission components including amplifiers (e.g., Power Amplifiers (PAs), filters, RF modulators (e.g., RF IQ modulators), and digital-to-analog converters (DACs), which RF transceiver **204** may utilize to mix the digital baseband samples received from baseband modem **206** and produce the analog radio frequency signals for wireless transmission by antenna system **202.** In some aspects baseband modem **206** may control the radio transmission and reception of RF transceiver **204,** including specifying the transmit and receive radio frequencies for operation of RF transceiver **204.**

As shown in FIG. **2****,** baseband modem **206** may include digital signal processor **208,** which may perform physical layer (PHY, Layer 1) transmission and reception processing to, in the transmit path, prepare outgoing transmit data provided by protocol controller **210** for transmission via RF transceiver **204,** and, in the receive path, prepare incoming received data provided by RF transceiver **204** for processing by protocol controller **210.** Digital signal processor **208** may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor **208** may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor **208** may include one or more processors configured to retrieve and execute program code that defines control and processing logic for physical layer processing operations. In some aspects, digital signal processor **208** may execute processing functions with software via the execution of executable instructions. In some aspects, digital signal processor **208** may include one or more dedicated hardware circuits (e.g., ASICs, FPGAs, and other hardware) that are digitally configured to specific execute processing functions, where the one or more processors of digital signal processor **208** may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor **208** may be realized as a coupled integrated circuit.

Terminal device **102** may be configured to operate according to one or more radio communication technologies. Digital signal processor **208** may be responsible for lower-layer processing functions (e.g., Layer 1/PHY) of the radio communication technologies, while protocol controller **210** may be responsible for upper-layer protocol stack functions (e.g., Data Link Layer/Layer 2 and/or Network Layer/Layer 3). Protocol controller **210** may thus be responsible for controlling the radio communication components of terminal device **102** (antenna system **202,** RF transceiver **204,** and digital signal processor **208)** in accordance with the communication protocols of each supported radio communication technology, and accordingly may represent the Access Stratum and Non-Access Stratum (NAS) (also encompassing Layer 2 and Layer 3) of each supported radio communication technology. Protocol controller **210** may be structurally embodied as a processor configured to execute protocol stack software (retrieved from a controller memory) and subsequently control the radio communication components of terminal device **102** to transmit and receive communication signals in accordance with the corresponding protocol stack control logic defined in the protocol stack software. Protocol controller **210** may include one or more processors configured to retrieve and execute program code that defines the upper-layer protocol stack logic for one or more radio communication technologies, which can include Data Link Layer/Layer 2 and Network Layer/Layer 3 functions. Protocol controller **210** may be configured to perform both user-plane and control-plane functions to facilitate the transfer of application layer data to and from radio terminal device **102** according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller **210** may include executable instructions that define the logic of such functions.

In some aspects, terminal device **102** may be configured to transmit and receive data according to multiple radio communication technologies. Accordingly, in some aspects one or more of antenna system **202,** RF transceiver **204,** digital signal processor **208,** and protocol controller **210** may include separate components or instances dedicated to different radio communication technologies and/or unified components that are shared between different radio communication technologies. For example, in some aspects protocol controller **210** may be configured to execute multiple protocol stacks, each dedicated to a different radio communication technology and either at the same processor or different processors. In some aspects, digital signal processor **208** may include separate processors and/or hardware accelerators that are dedicated to different respective radio communication technologies, and/or one or more processors and/or hardware accelerators that are shared between multiple radio communication technologies. In some aspects, RF transceiver **204** may include separate RF circuitry sections dedicated to different respective radio communication technologies, and/or RF circuitry sections shared between multiple radio communication technologies. In some aspects, antenna system **202** may include separate antennas dedicated to different respective radio communication technologies, and/or antennas shared between multiple radio communication technologies. Accordingly, while antenna system **202,** RF transceiver **204,** digital signal processor **208,** and protocol controller **210** are shown as individual components in FIG. 2, in some aspects antenna system **202,** RF transceiver **204,** digital signal processor **208,** and/or protocol controller **210** may encompass separate components dedicated to different radio communication technologies.

The terminal device **102** may also include application processor **212** and memory **214.** Application processor **212** may be a CPU, and may be configured to handle the layers above the protocol stack, including the transport and application layers. Application processor **212** may be configured to execute various applications and/or programs of terminal device **102** at an application layer of terminal device **102,** such as an operating system (OS), a user interface (UI) for supporting user interaction with terminal device **102,** and/or various user applications. The application processor may interface with baseband modem **206** and act as a source (in the transmit path) and a sink (in the receive path) for user data, such as voice data, audio/video/image data, messaging data, application data, basic Internet/web access data, etc. In the transmit path, protocol controller **210** may therefore receive and process outgoing data provided by application processor **212** according to the layer-specific functions of the protocol stack, and provide the resulting data to digital signal processor **208.** Digital signal processor **208** may then perform physical layer processing on the received data to produce digital baseband samples, which digital signal processor may provide to RF transceiver **204.** RF transceiver **204** may then process the digital baseband samples to convert the digital baseband samples to analog RF signals, which RF transceiver **204** may wirelessly transmit via antenna system **202.** In the receive path, RF transceiver **204** may receive analog RF signals from antenna system **202** and process the analog RF signals to obtain digital baseband samples. RF transceiver **204** may provide the digital baseband samples to digital signal processor **208,** which may perform physical layer processing on the digital baseband samples. Digital signal processor **208** may then provide the resulting data to protocol controller **210,** which may process the resulting data according to the layer-specific functions of the protocol stack and provide the resulting incoming data to application processor **212.** Application processor **212** may then handle the incoming data at the application layer, which can include execution of one or more application programs with the data and/or presentation of the data to a user via a user interface.

Memory **214** may embody a memory component of terminal device **102,** such as a hard drive or another such permanent memory device. Although not explicitly depicted in FIG. **2****,** the various other components of terminal device **102** shown in FIG. **2** may additionally each include integrated permanent and non-permanent memory components, such as for storing software program code, buffering data, etc.

In accordance with some radio communication networks, terminal devices **102** and **104** may execute mobility procedures to connect to, disconnect from, and switch between available network access nodes of the radio access network of radio communication network **100.** As each network access node of radio communication network **100** may have a specific coverage area, terminal devices **102** and **104** may be configured to select and re-select between the available network access nodes in order to maintain a strong radio access connection with the radio access network of radio communication network **100.** For example, terminal device **102** may establish a radio access connection with network access node **110** while terminal device **104** may establish a radio access connection with network access node **120.** In the event that the current radio access connection degrades, terminal devices **102** or **104** may seek a new radio access connection with another network access node of radio communication network **100;** for example, terminal device **104** may move from the coverage area of network access node **120** into the coverage area of network access node **110.** As a result, the radio access connection with network access node **120** may degrade, which terminal device **104** may detect via radio measurements such as signal strength or signal quality measurements of network access node **120.**

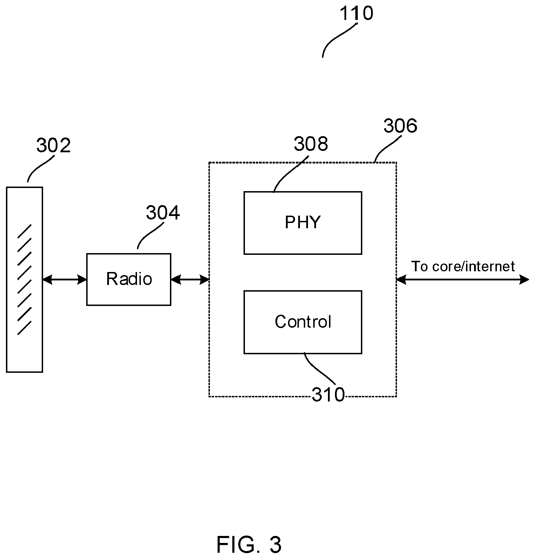

FIG. **3** shows an exemplary internal configuration of a network access node, such as network access node **110,** according to some aspects. As shown in FIG. **3****,** network access node **110** may include antenna system **302,** radio transceiver **304,** and baseband subsystem **306** (including physical layer processor **308** and protocol controller **310).** In an abridged overview of the operation of network access node **110,** network access node **110** may transmit and receive wireless signals via antenna system **302,** which may be an antenna array including multiple antennas. Radio transceiver **304** may perform transmit and receive RF processing to convert outgoing baseband samples from baseband subsystem **306** into analog radio signals to provide to antenna system **302** for radio transmission and to convert incoming analog radio signals received from antenna system **302** into baseband samples to provide to baseband subsystem **306.** Physical layer processor **308** may be configured to perform transmit and receive PHY processing on baseband samples received from radio transceiver **304** to provide to controller **310** and on baseband samples received from controller **310** to provide to radio transceiver **304.** Controller **310** may control the communication functionality of network access node **110** according to the corresponding radio communication technology protocols, which may include exercising control over antenna system **302,** radio transceiver **304,** and physical layer processor **308.** Each of radio transceiver **304,** physical layer processor **308,** and controller **310** may be structurally realized with hardware (e.g., with one or more digitally-configured hardware circuits or FPGAs), as software (e.g., as one or more processors executing program code defining arithmetic, control, and I/O instructions stored in a non-transitory computer-readable storage medium), or as a mixed combination of hardware and software. In some aspects, radio transceiver **304** may be a radio transceiver including digital and analog radio frequency processing and amplification circuitry. In some aspects, radio transceiver **304** may be a software-defined radio (SDR) component implemented as a processor configured to execute software-defined instructions that specify radio frequency processing routines. In some aspects, physical layer processor **308** may include a processor and one or more hardware accelerators, wherein the processor is configured to control physical layer processing and offload certain processing tasks to the one or more hardware accelerators. In some aspects, controller **310** may be a controller configured to execute software-defined instructions that specify upper-layer control functions. In some aspects, controller **310** may be limited to radio communication protocol stack layer functions, while in other aspects controller **310** may also be configured for transport, internet, and application layer functions.

Network access node **110** may thus provide the functionality of network access nodes in radio communication networks by providing a radio access network to enable served terminal devices to access communication data. For example, network access node **110** may also interface with a core network, one or more other network access nodes, or various other data networks and servers via a wired or wireless backhaul interface.

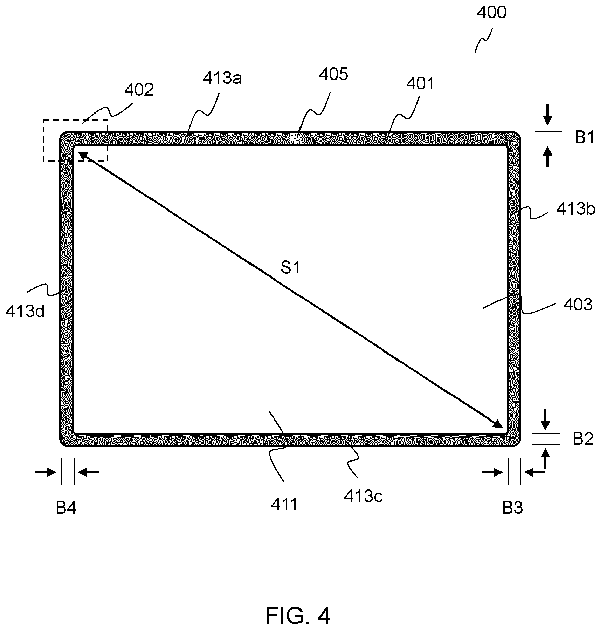

In tablets or laptops configured to work with detachable keyboards, antennas may be disposed along opposing edges of the display screen of the device and a camera may be disposed along an edge between the opposing edges to ensure minimal impact to seamless industrial design. The camera is preferably disposed at a longer edge (i.e., landscape mode) to prioritize productivity usage scenarios. In such an arrangement, hand gripping over antennas would be minimized in casual usage scenarios when held in portrait mode. In some example, docking connectors may be disposed along on an edge opposite the edge including the camera. FIG. 4 illustrates an exemplary wireless display device 400 according to various examples of the present disclosure. The narrow bezel design of device 400 has space to accommodate one or more cameras but cannot accommodate proximity sensors (e.g., capacitive SAR sensors). The device 400 may have a diameter SI and the bezels may have widths B1, B2, B3 and B4. For example, the device 400 may have a diagonal dimension SI of 330 mm and the bezels may all have a width B1-B4 of 8.5 mm (e.g., same width). Table 1 indicates exemplary dimensions of a narrow bezel design with 8.5 mm bezels. This poses challenges to implementing an antenna design in the bezel because there is no space in the bezel to accommodate SAR proximity sensors.

| Table 1 | |
|---|---|
| North Bezel (includes 8MP camera) | |
| Wall | 0.6 |
| Tolerance gap (Cover glass to wall air gap) | 0.1 |
| Shelf | 0.5 |
| Camera | 5.0 |
| Display to camera | 0.3 |
| Display inactive area | 2.0 |
| Total bezel width | 8.5 |

| South Bezel | |
|---|---|
| Wall | 0.6 |
| Cover glass to wall air gap | 0.1 |
| Shelf | 2.1 |
| Camera Y | 5.0 |
| Display tolerance | 0.3 |
| Display inactive area | 4.9 |
| Tolerance gap (air gap) | 0.3 |
| Wall | 0.6 |
| Touch Flexible Printed Circuit (FPC) board | 0.2 |
| Total bezel width | 8.5 |

| Left and Right Bezels | |
|---|---|
| Wall | 0.6 |
| Tolerance gap (CG wall air gap) | 0.1 |
| Shelf | 2.0 |
| USB Type C connector | 3.5 |
| Display tolerance | 0.3 |
| Display inactive area | 2.0 |
| Total bezel width | 8.5 |

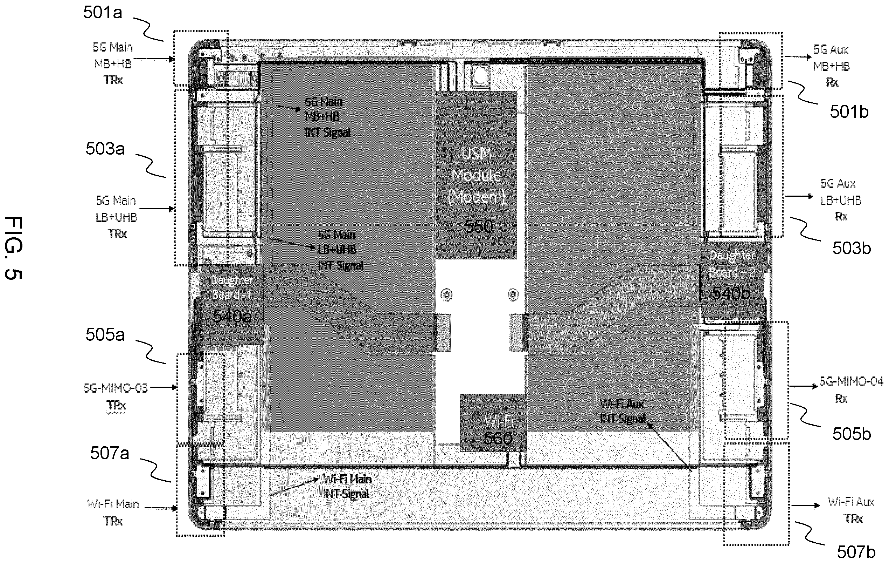

FIG. 5 illustrates an exemplary antenna system floor plan for wireless display device 400 according to various examples of the present disclosure. In particular, FIG. 5 illustrates an exemplary antenna design placement for 5G and Wi-Fi communication along two bezels (e.g., left and right bezels). The left edge of device 400 may include a 5G Main TRx antenna 501a for mid-band and high-band signals is arranged at a north left corner, a 5G Main TRx antenna 503a for low-band and ultra-high-band signals is arranged below that, a 5G MIMO antenna 505a is arranged below that, and a Wi-Fi Main TRx antenna 507a is arranged below that in the south left corner. The right edge of device 400 may include a 5G Aux TRx antenna 501b for mid-band and high-band signals is arranged at a north right corner, a 5G Aux TRx antenna 503b for low-band and ultra-high-band signals is arranged below that, another 5G MIMO antenna 505b is arranged below that, and a Wi-Fi Aux TRx antenna 507b is arranged below that in the south right corner. As shown in FIG. 5, the antennas are arranged substantially at (e.g., at or very close) to the edge of device 400. The antennas may be arranged within the left and right bezels. Due to the narrow bezels, the antenna power would have to be significantly reduced compared to other designs (e.g., clamshell design of laptops).

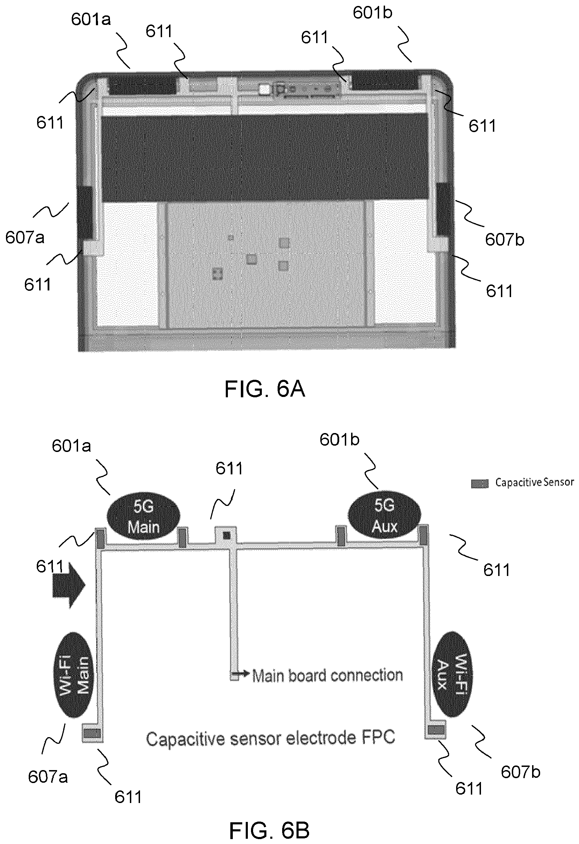

The following test scenarios provide an indication of the power reduction needed for narrow bezel designs and why the TAS mechanism is used in conventional narrow bezel designs. FIGS. 6A and 6B illustrate a schematic view and a block diagram view of an antenna system floor plan for a wireless display device 600 with a wide bezel design including SAR proximity sensors. In particular, FIG. 6 illustrates an exemplary antenna design placement for 5G and Wi-Fi communication including capacitive SAR sensors 611 placed near the transmit antennas. As shown in FIG. 6, there are four transmit/receive antennas (e.g., printed circuit board (PCB) antennas) disposed along three edges of a wireless display device in a portrait orientation (i.e., a length of the north and south bezels being shorter than a length of the left and right bezels). For example, the north edge may include a 5G Main antenna 601a and a 5G Aux antenna 601b and the left and right edges may include Wi-Fi Main antenna 607a and Wi-Fi Aux antenna 607b. The device 600 may include other antennas. A SAR sensor 610 may comprise a flexible printed circuit (FPC) board and one or more capacitive sensing elements 611 extending from the FPC. One or more capacitive SAR sensing elements (e.g., electrodes) may be placed near each of the antennas. Each SAR sensing element (e.g., electrode) may be electrically connected to a SAR sensor processor on the FPC board. A single SAR sensor processor or integrated circuit (IC) may be configured to handle up to five transmit antennas (i.e., 5G Main/Aux and Wi-Fi Main/Aux). A conventional bezel design with antennas may include a plurality of SAR proximity sensors (e.g., 1 or 2 per antenna) and a plurality of flexible printed circuit board (FPC) (e.g., 4). In the event of human presence detected within a threshold triggering distance, the capacitive sensor may trigger a power back-off event as shown in the SAR measurements in Table 2 for a conventional design. The SAR sensor 610 may be connected via a single common interrupt line or be connected via individual interrupt lines.

| **Table 2** | | | | | | | | |
|---|---|---|---|---|---|---|---|---|
| Bands | | Channel | Body SAR, SAR at 0 mm Distance, W/Kg | Body SAR, Max SAR per Band, W/Kg | Power back- off required, dB | Body SAR after power back off applied | Max SAR at 5 mm Distance, W/Kg | Max SAR at 10 mm Distance, W/Kg |
| B1 | BACK | L | 7.23 | 7.23 | 7.1 | 0.799 | 1.81 | 1.06 |
| | | M | 6.72 | | | 0.788 | 1.81 | 1.05 |
| | | H | 6.26 | | | 0.749 | 2.26 | 1 |
| | Edge1 | L | 3.76 | | | 0.479 | 1.43 | 0.826 |
| | | M | 3.76 | | | 0.523 | 1.43 | 0.833 |
| | | H | 3.76 | | | 0.54 | 1.44 | 0.828 |
| | Edge2 | L | 0.489 | | | 0.094 | 0.241 | 0.146 |
| | | M | 0.484 | | | 0.107 | 0.242 | 0.144 |
| | | H | 0.487 | | | 0.117 | 0.244 | 0.145 |

The measurements at various distances may be used to determine a threshold triggering distance. Referring to Table 2, the LTE/5G band B1 has the highest SAR, 7.23 W/Kg at 0 mm distance from the Body Phantom measured at the back position of the device. The LTE B1 SAR measurements at the back position was also tested at 5mm and 10mm distances to determine when SAR < 1.3 W/kg. According to the tests, 10 mm is a distance where SAR is less than 1.3 W/Kg. Based on the above SAR measurements, a sensor triggering distance may be decided to be 10 mm.

Based on the measurements in Table 2, in the event of human presence, the transmission power of a 5G antenna at band B1 would have to be reduced by 7.1dB (at 0 mm distance) to comply with radiation exposure regulations. This can significantly affect the throughput of the wireless display device.

As an alternative, conventional narrow bezel designs include a radio modem that can implement a time averaged SAR transmission algorithm internally on the modem FW, where modem can periodically check the average real time SAR transmission over a time period and ensure that SAR exposure is not beyond the regulatory requirement. Most of connectivity devices use the time average SAR algorithm.

Algorithms like the Time Averaged SAR mechanism ensures good connectivity and throughput but cannot take advantage of the opportunity to improve the performance in certain scenarios where user is not close to the device, which becomes more significant in narrow bezel designs. Especially, devices that are configured to be used with detachable modules.

Accordingly, the following examples of a device 400 can detect human proximity without using SAR sensors and can safely and efficiently determine when to use or not use the TAS mechanism. For example, the device 400 may have two or more antenna power modes including a TAS mode and a non-TAS mode and may automatically switch between a TAS mode and a non-TAS mode based on human proximity detectable from image data and/or touch data. The non-TAS mode may include an unrestricted mode (e.g., antenna transmission with no power back-off) or a partial restriction mode (e.g., antenna transmission with an intermediate power back-off)

In some examples, a device 400 may use image data to detect a user's position and a proximity of the user to the device, and accordingly switch from TAS mode to non-TAS mode (e.g., unrestricted mode). The image data may be from an always ON camera. The image data may be processed with a visual processor (e.g., low-power circuit or IC dedicated to visual processing) configured to recognize humans in the image data. The visual processor may be a stand-alone processing module or it may be a part of a host processor module (e.g., SoC). In some examples, the image data is processed entirely by a stand-alone low-power visual processing circuit or IC.

In some examples, a device 400 may use touch input to detect a user's hand position and a proximity of the user to the device, and accordingly switch from TAS mode to non-TAS mode (e.g., unrestricted mode). The touch data may be from a touch screen panel. The touch data may be processed by a touch controller or IC. The touch controller or IC may be a stand-alone processing module. In some examples, the touch data is processed entirely by the touch controller or IC.

In some examples, a device 400 may use touch input and image data to detect a user's position and a proximity of the user to the device and accordingly switch from TAS mode to a non-TAS mode (e.g., unrestricted mode).

For example, touch input may be touch information from a touch screen panel and image data may be image data from a camera. Human presence near the device may be determined based on touch panel information (e.g., contact position, hover position, grip position detection) and image information (e.g., image recognition) and antenna power management may automatically switch between a TAS mode (e.g., applying restricted antenna power based on limitations of a TAS mechanism) and a non-TAS mode (e.g., applying unrestricted or normal antenna power) to improve connectivity.

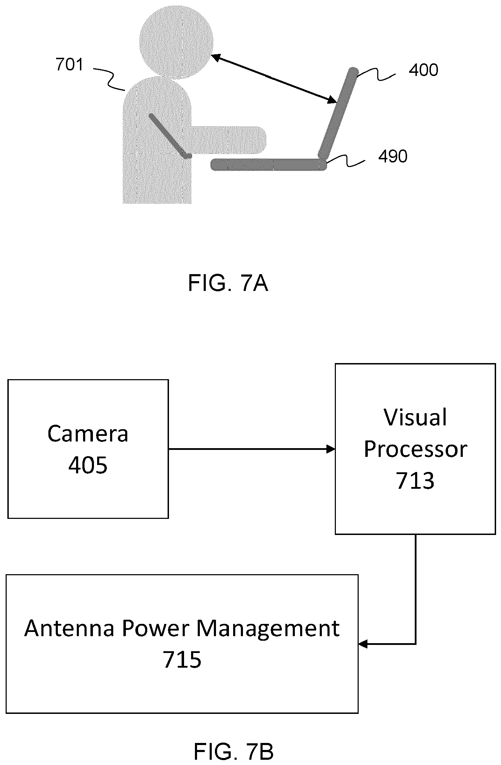

FIG. 7A-7B illustrate an exemplary proximity detection based on image information according to some examples of the present disclosure. FIG. 7A illustrates a user 701 in front of a device 400 that is docked to a detachable module 490 (e.g., keyboard). The front of the device 400 includes a camera 405. FIG. 7B illustrates a camera 405 that provides image data to a visual processor 713. The camera 405 may be arranged in a bezel of the device 400. The camera 405 may be a front facing camera disposed along a top bezel of device 400. Camera 405 may be always on or active. Visual processor 713 may be a visual processing circuity or IC that processes the image data to determine if there is human presence near device 400. Visual processor 713 may be a low-power circuitry or co-processor that is operational when a host processor of the wireless device is in sleep or hibernation mode. The visual processor 713 may be configured to recognize a human from the image data provided by the camera 405 and determine a distance between the recognized human and the device 400. That is, the visual processor 713 may determine if there is a pattern in the image data recognizable as a human and within a threshold distance from the camera 405 or device 400. In some embodiments, the device 400 may also include an additional camera (e.g., rear facing) that provides additional image data to the visual processor 713 which may be configured to detect a human from the additional image data within the threshold distance.

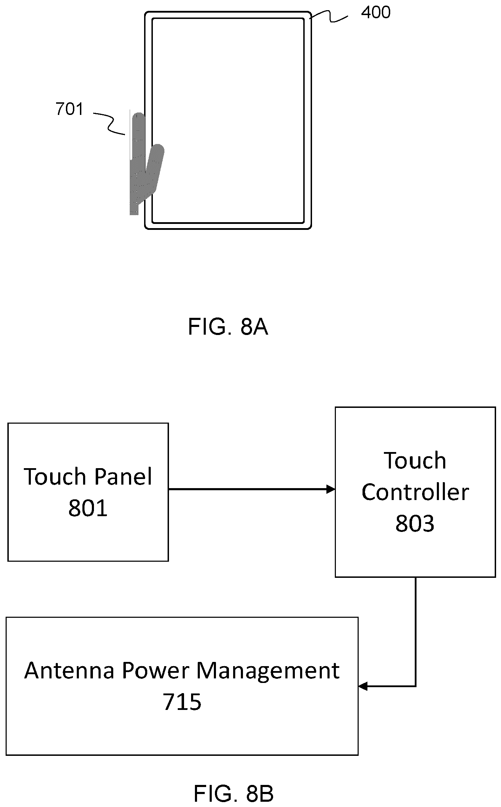

FIGS. 8A-8B illustrate an exemplary proximity detection based on touch information according to some examples of the present disclosure. FIG. 8A illustrates a user 701 holding a device 400. The front of the device 400 includes a touch screen display including a touch panel 801. The touch active area of the touch panel 801 may coincide with the display area of the display. The touch panel 801 is configured to receive touch input from the user 701 for interfacing with the device 400. The device 400 may or may not include a camera 405. And if the device 400 includes a camera 405, the user 701 may or may not be within a field of view of the camera 405. FIG. 8B illustrates a touch panel 801 that can receive touch input and provide touch data to a touch controller 803. The use of a touch screen panel to detect human proximity may eliminate the use of SAR proximity sensors to detect human hand presence near an antenna. More detailed information may be extracted from a touch input layer (e.g., touch screen panel). For example, a touch screen panel 801 may be used to detect finger contact position, finger hovering position, and/or grip position. A touch screen panel can provide details of exact position of the hand on the device, this information will help to independently switch an individual antenna into TAS mode or into unrestricted mode to transmit at max throughput. For example, the sensed position (e.g., contact position, hovering position, and/or grip position) may be used to determine a distance between the sensed position and an antenna.

Referring to FIG 8B, the touch panel 801 may be arranged on a display screen of the device 400. The touch panel 801 may be always on or active. Touch controller 803 may be a touch processing circuity or IC that processes the touch data to determine if there is human presence near device 400 or an antenna of device 400. Touch controller 803 may be a low-power circuitry or co-processor that is dedicated to processing touch data. Touch controller 803 may be operational when a main processor of the device 400 is in sleep or hibernation mode. The touch controller 803 may be configured to detect contact on the touch panel 801, hovering over the touch panel 801 and/or gripping of the touch panel 801 based on the touch data received from the touch panel 801. The touch panel 801 may include a plurality of capacitive electrodes in the touch area of a display and the touch controller 803 may determine if there is a capacitance change corresponding to contact, hovering or gripping the touch panel 801 or device 400 based on different capacitance thresholds. For example, a thumb at an edge of the screen. The touch panel and touch controller may be configured to detect multiple sensed positions (e.g. contact points, hover points, and/or grip locations). In some examples, the device 400 may be able to detect capacitance change localized to a particular antenna of the device 400. For example, because antenna positions are predetermined, the sensed location can be used to determine if there is proximity to a particular antenna. For another example, as discussed in more detail below, a capacitance change detected in routing lines connecting touch sensing electrodes to the touch controller may also be used to determine grip position.

A power consumption comparison for a touch panel and a proximity SAR sensor is provided in Table 3. There is no additional power needed to use the touch panel to detect human proximity. The power consumption by a touch controller for multiple contact detection (e.g., 10 point touch) and a pen (e.g., single point touch) is approximately the same.

| **Table 3: Power consumption by P-SAR and touch panel** | | | |
|---|---|---|---|
| **Modes** | **P-SAR** | **Touch** | **Comment** |
| Active | 1mW | 150mW | No additional power is required as touch functionality is needed for normal device usage |
| Dozing | <1mW | 80mW | |
| Sleep | 1uW | 1mW | |

Referring again to FIG. 4, the device 400 may have two portions - an active area 403 for touch/contact sensing (e.g. touch reactive area) and an inactive area 401 for routing (e.g., touch non-reactive area). The active area may correspond to a display area and the non-active area may correspond to a non-display area.

The active area 403 may include a plurality of touch sensing electrodes distributed throughout the reactive area. For example, the touch sensing electrodes may be arranged in a gridded pattern. The non-active area 401 may include a touch controller and a plurality of routing lines arranged in the non-reactive area. The routing lines electrically connecting the touch controller to the plurality of touch sensing electrodes. The touch controller may receive touch data (e.g., capacitance information) from a touch screen panel and may process the touch data to determine if there is human presence near the device and/or a particular antenna of the device. For example, the touch controller may include processing circuitry to determine a contact position, a hover position, and/or a grip position based on the touch data. The touch controller may also be an off-the-shelf touch controller that may include processing circuitry to determine a contact position and/or a hover position and pass the touch data or metadata to another processor to determine a grip position on the touch screen panel. The determined contact, hover and/or grip position (e.g., sensed position) is then used to determine whether the human hand is close to the antenna. In some examples, the touch controller 803 and the visual processor 713 may be separate ICs. In some examples, the touch controller 803 and the visual processor 713 may be included together in one low-power IC.

The touch panel 801 can detect a human finger contacting the touch active area by measuring the capacitance difference between a pair of sensing electrodes (mutual-capacitance) and/or between a sensing electrode and air (self-capacitance). The touch controller 803 may charge a transmit electrode and measure a voltage of a receive electrode to detect a capacitance difference. That is, to determine a capacitance difference, the touch controller may measure the voltage discharge time in the receive electrode. The touch controller may measure the voltage at the receive electrode and may set a counter which starts counting the number of units it takes for the measured voltage at the receive electrode to reach a pre-defined threshold. The threshold may also be configurable depending on the desired sensitivity of the touch panel. The analog capacitance change information may be translated to a digital value in quantized units. For mutual-capacitance sensing, the transmit electrode and the receive electrode are two different sensing electrodes, that is, the transmit electrode is a first sensing electrode and the receive electrode is a second sensing electrode of a pair of sensing electrodes. For example, the first sensing electrode and the second sensing electrode may run perpendicular to each other. For self-capacitance sensing, the transmit electrode and the receive electrode are the same sensing electrode, that is, there is a single sensing electrode.

A touch screen panel can also detect a human finger hovering over the touch active area by measuring the capacitance difference between a pair of sensing electrodes and/or between a sensing electrode and air. For example, a touch controller can detect a change in capacitance when a human hand is within a hovering distance (e.g., about 25 mm) above the touch screen panel. To detect hovering, the touch controller may be configured with a first threshold value and a second threshold value. The first threshold value may be a contact detection threshold value and the second threshold value may be a hovering detection threshold value. The hovering detection threshold value corresponds to a capacitance change indicating hovering. The hovering detection threshold value may be adjusted within a range of detectable hovering distances by system tuning.

Referring to FIG. 8A, which illustrates touch/grip detection on a device 400, an average size of a human finger is about 16 mm. When the wireless display device is held, a finger would likely cover a narrow bezel (e.g., 8.5 mm) and a portion of a touch active area of a touch screen panel. Accordingly, finger contact near an edge of the active areas of the touch screen panel may be used to determine a grip position.

Additionally, or alternatively, the touch non-active area used for routing can also be used for grip detection if the user's hand is not contacting an active area of the touch screen panel. That is, capacitance data from the touch non-active area can be used to detect a grip position around the wireless display device and determine if a hand is near an antenna.

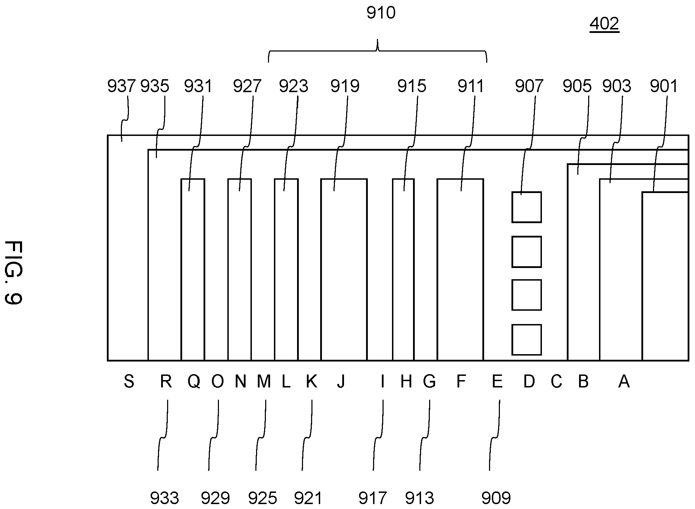

FIG. 9 illustrates an exemplary arrangement of a non-active area of a touch screen panel according to some examples of the present disclosure. For example, FIG. 9 may illustrate the dashed box 402 of FIG. 4 in greater detail. Table 4 shows exemplary dimensions of the transition between the different layers of the display screen and touch panel in the touch reactive area to the routing wires in the touch non-reactive area shown in FIG. 9. Referring to FIG. 9, device 400 may include an active display area 901 (e.g., LCD active area), touch panel viewing area (VA) 903, a touch panel active area (AA) 905, Touch Bar (T-bar) 907, Gap1 909, a routing region 910, Gap5 925, Ground3 927, Gap6 929, Pad 931, Gap7 933, Film OD 935, TP cover layer (CL) OD 937. The routing region 910 may include a plurality of routing wires (e.g., traces) for connecting to a plurality of touch sensing electrodes. Device 400 may include a routing region 910 in a left bezel and a right bezel. For example, FIG. 9 illustrates a trace region 910 having two traces, that is, Trace1 (W+S) 911, Gap2 913, Ground1 915, Gap3 917, Trace2 (W+S) 919, Gap4 921, Ground2 923, but is not limited as such. For example, as indicated in Table 4, the trace region 910 may include 45 traces. The plurality of routing wires may be lines connecting touch sensing electrodes (e.g. TX, RX) and a touch controller (e.g., disposed at a south bezel).

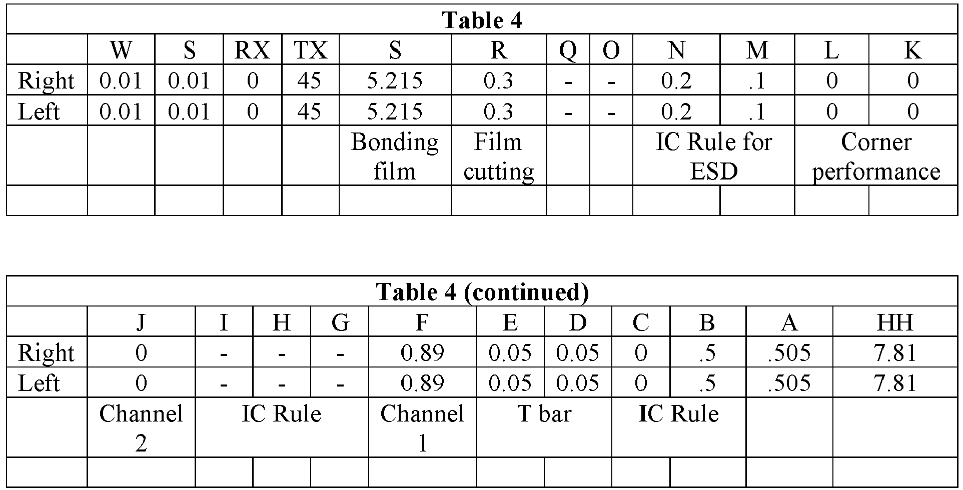

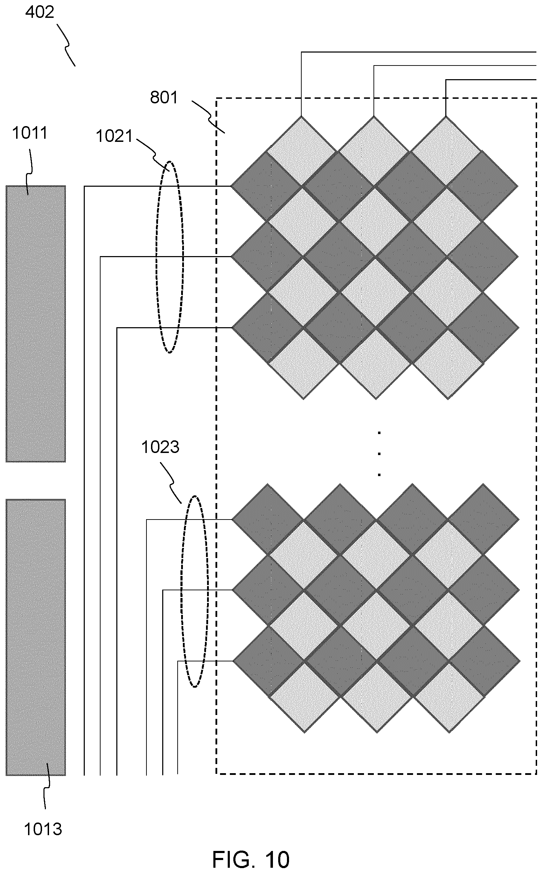

FIG. 10 illustrates an exemplary arrangement of a non-active area of a touch screen panel according to some examples of the present disclosure. For example, FIG. 10 may illustrate the dashed box 402 of FIG. 4 in greater detail. A plurality of wires 1021 may electrically connect sensing electrodes of the touch panel 801 to the touch controller 803. The plurality of wires 1021 may run along an antenna 1011. To detect a grip, the touch controller 803 may be configured with three threshold levels of capacitance detection sensitivity. The first threshold value may be a contact detection threshold value and the second threshold value may be a hovering detection threshold value. The third threshold value may be a grip detection threshold value. The grip detection threshold value corresponds to a capacitance change indicating gripping. As the plurality of wires 1021 are routed in the bezel, the grip detection threshold value may be a small value that may be triggered by noise. So unlike, contact or hover detection, grip detection requires detecting a capacitance change exceeding the grip detection threshold value for more than one of the wires among the plurality of wires 1021 to avoid a false detection. That is, the capacitance of each wire of the plurality of wires 1021 may be monitored and if more than one wire shows a capacitance change that exceeds the grip detection threshold a grip is detected. In some examples, to improve grip detection accuracy, grip detection is determined when most of the wires of the plurality of wires 1021 show a capacitance change that exceeds the grip detection threshold. In some examples, to further improve grip detection accuracy, grip detection is determined when all of the wires of the plurality of wires 1021 show a capacitance change that exceeds the grip detection threshold. The grip detection threshold value may be adjusted so that most or all of the wires of the plurality of wires would have the triggering capacitance change during fine tuning.

In some examples, a second plurality of wires 1023 may electrically connect other sensing electrodes of the touch panel 801 to the touch controller 803. The second plurality of wires 1023 may run along a second antenna 1013. In this case, the plurality of wires 1021 may be a first plurality of wires connected to sensing electrodes associated with first portion of the display and the second plurality of wires 1023 may be connected to sensing electrodes associated with a second portion of the display different from the first portion. A capacitance change exceeding the grip detection threshold value among the plurality of wires 1021 (e.g., most or all) would indicate a grip near antenna 1011. A capacitance change exceeding the grip detection threshold value among the second plurality of wires 1023 (e.g., most or all) would indicate a grip near antenna 1013. Additional grip positions near other antennas may be similarly detected by routing additional sets of plurality of wires connecting sensing electrodes to the touch controller near respective antennas and monitoring the capacitance change among each of these sets.

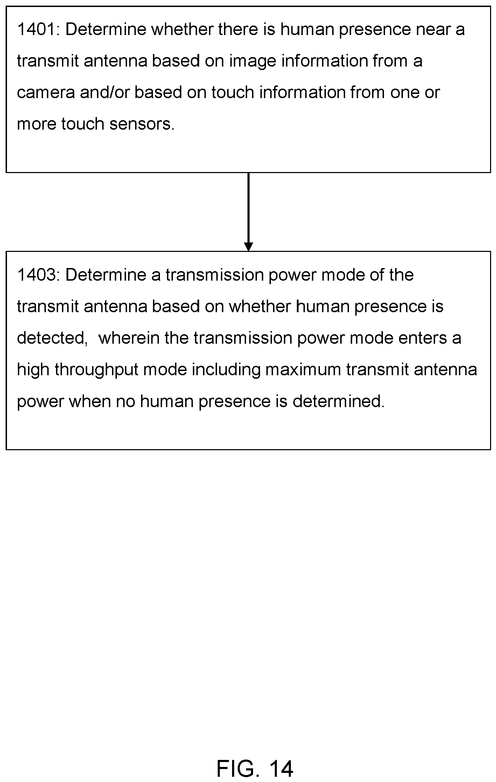

FIG. 14 illustrates an exemplary flow chart for detecting human proximity using image and/or touch information. As shown in FIG. 14, at 1401, processing circuitry may determine whether there is human presence near a transmit antenna based on image information from a camera and/or based on touch information from one or more touch sensors. At 1403, the processing circuitry may determine a transmission power mode of the transmit antenna based on whether human presence is detected, wherein the transmission power mode enters a high throughput mode including maximum transmit antenna power when no human presence is determined.

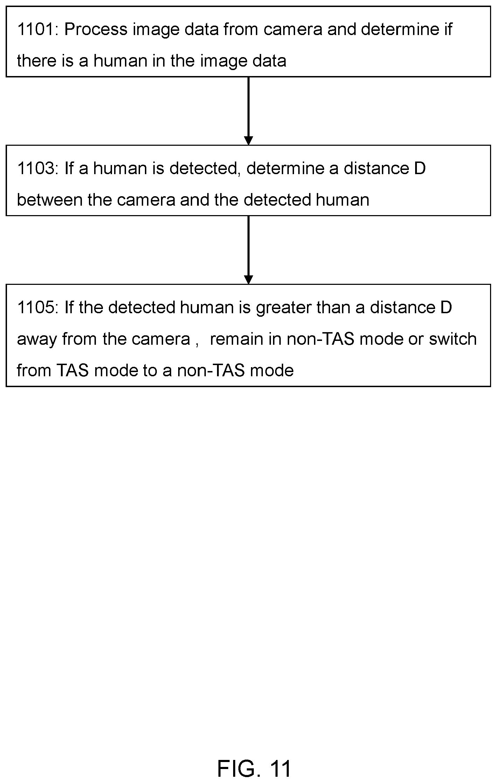

FIG. 11 illustrates an exemplary flow chart for detecting human proximity using image information. As shown in FIG. 11, at 1101 visual processor 713 (e.g., a low-power visual processing circuit) processes image data from a camera 405 and determines if there is a human in the image data. At 1103, if a human (e.g., user) is detected, the visual processor 713 determines a distance D from device 400 to the detected human. For example, distance D may be a minimum distance to touch the device (with an outstretched arm) or a minimum distance for a user to comfortably sit in front of the wireless display device and interact using a hand. For example, distance D may be 60 cm. At 1105, if the detected human is determined to be more than distance D away from device 400, then the antenna transmission power mode of device 400 remains in non-TAS mode or exits TAS mode and enters a non-TAS mode. For example, the non-TAS mode may be an unrestricted mode where the antenna is allowed to transmit at normal (e.g., maximum) power. If the detected human is less than distance D away from device 400, then the antenna transmission power mode of device 400 remains in TAS mode or enters TAS mode and the antenna transmission power is regulated by a TAS mechanism. In some examples, the determined antenna transmission power mode may be applied to all antennas of device 400.

Currently, commercially available cameras have a maximum field of view (FOV) of 121 degrees. The limited FOV of commercially available cameras allows a user to hold a wireless display device without coming into to the FOV of the camera. Thus, currently there is a blind spot for detecting human proximity based on visual information. To mitigate this concern, detecting human proximity using touch information from a touch screen panel may be used as an alternative or in addition to detecting human proximity using image information.

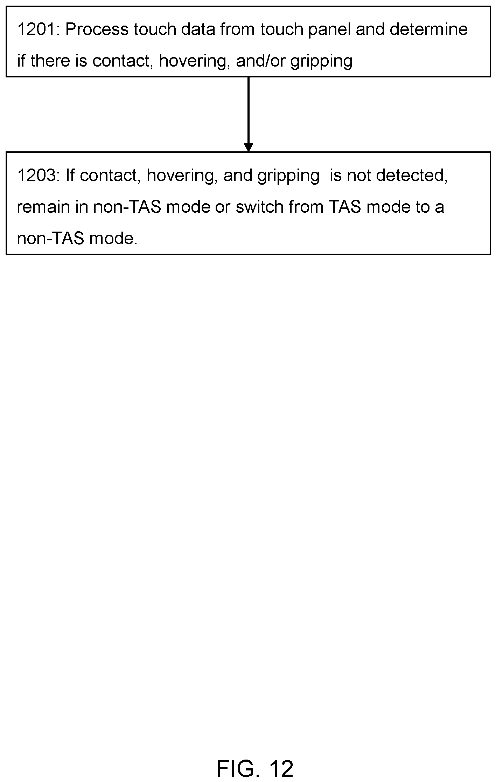

FIG. 12 illustrates an exemplary flow chart for detecting human proximity using touch information. As shown in FIG. 12, at 1201 touch controller 803 processes touch data from a touch panel 801 to determine if there is any contact, hovering and/or gripping. At 1203, if contact, hovering, and gripping is not detected, the antenna transmission power mode of device 400 remains in non-TAS mode or exits TAS mode and enters a non-TAS mode. For example, the non-TAS mode may be an unrestricted mode where the antenna is allowed to transmit at normal (e.g., maximum) power. If contact, hovering or gripping is detected, then the antenna transmission power mode of device 400 remains in TAS mode or enters TAS mode and the antenna transmission power is regulated by a TAS mechanism.

Alternatively, or additionally, the antenna transmission power mode may be determined by a contact position, hovering position, and/or gripping position. A touch controller 803 or a host processor may determine whether a position of a hand contacting the touch screen panel, hovering over the touch screen panel or gripping a side of the touch screen panel is near an edge of the touch screen panel where an antenna is disposed. If the contact position, hovering position or gripping position is within a threshold distance (e.g., 20 mm) to an antenna, the antenna transmission power mode remains in the TAS mode or enters TAS mode and the antenna must transmit at the lowest transmission power. If there is contact, hovering, or gripping and the contact position, hovering position or gripping position is not within a threshold distance (e.g., 20 mm) to an antenna, the antenna transmission power mode may remain in non-TAS mode or exit TAS mode and enter non-TAS mode. For example, the non-TAS mode may be a partially restricted mode where the antenna is allowed to transmit at a reduced power, which is an intermediate power level between TAS mode and unrestricted mode. For example, the intermediate power level may be 3dBm less than the power level of the unrestricted mode. In some examples, the determined antenna transmission power mode may be applied to all antennas of device 400. In some examples, the antenna transmission power mode is determined individually for each antenna.

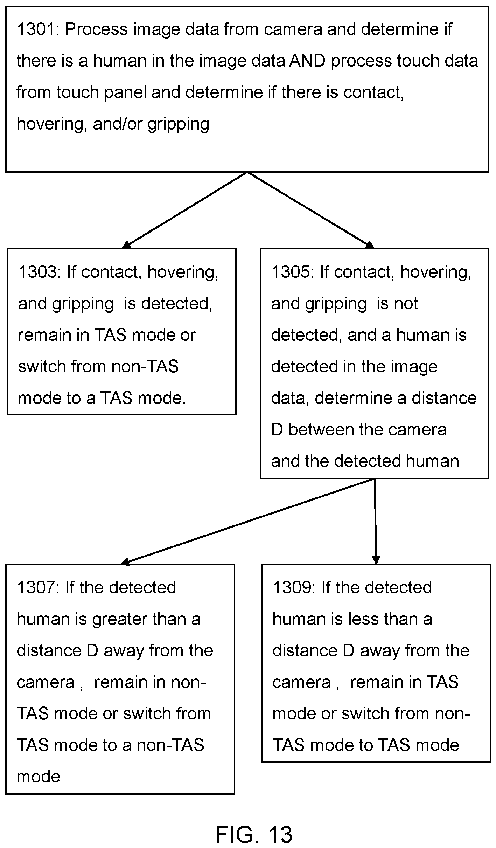

FIG. 13 illustrates an exemplary flow chart for detecting human proximity using image and touch information. As shown in FIG. 13, at 1301 visual processor 713 (e.g., a low-power visual processing circuit) processes image data from a camera 405 and determines if there is a human in the image data and a touch controller 803 processes touch data from a touch panel 801 to determine if there is any contact, hovering and/or gripping of the touch panel 801. At 1303, if contact, hovering or gripping is detected, then the antenna transmission power mode of device 400 remains in TAS mode or enters TAS mode and the antenna transmission power is regulated by a TAS mechanism. At 1305, if contact, hovering or gripping is not detected, but a human is detected in the image data, the visual processor 713 determines a distance D from device 400 to the detected human. For example, distance D may be a minimum distance to touch the device (with an outstretched arm) or a minimum distance for a user to comfortably sit in front of the wireless display device and interact using a hand. For example, distance D may be 60 cm. At 1307, if the detected human is determined to be more than distance D away from device 400, then the antenna transmission power mode of device 400 remains in non-TAS mode or exits TAS mode and enters a non-TAS mode. For example, the non-TAS mode may be an unrestricted mode where the antenna is allowed to transmit at normal (e.g., maximum) power. At 1309, if the detected human is less than distance D away from device 400, then the antenna transmission power mode of device 400 remains in TAS mode or enters TAS mode and the antenna transmission power is regulated by a TAS mechanism.

Alternatively, or additionally, at 1309, the antenna transmission power mode may exit TAS mode. The TAS mode may be exited depending on an aggressiveness setting. If the aggressiveness setting is high, the antenna transmission power may exit the TAS mode and enter an unrestricted mode and the antenna is allowed to transmit at full power (e.g., normal or unrestricted mode). If the aggressiveness setting is moderate, the antenna transmission power may exit the TAS mode and enter a partially restricted mode and the antenna is allowed to transmit at a reduced power level (e.g., -3 dBm from normal mode). If the aggressiveness setting is low, the antenna transmission power remains in TAS mode or switches from a non-TAS mode to TAS mode.

Alternatively, or additionally, at 1303, the antenna transmission power mode may be determined by a contact position, hovering position, and/or gripping position. A touch controller 803 or a host processor may determine whether a position of a hand contacting the touch screen panel, hovering over the touch screen panel or gripping a side of the touch screen panel is near an edge of the touch screen panel where an antenna is disposed. If the contact position, hovering position or gripping position is within a threshold distance (e.g., 10 mm) to an antenna, the antenna transmission power mode remains in the TAS mode or enters TAS mode and the antenna must transmit at the lowest transmission power. If there is contact, hovering, or gripping and the contact position, hovering position or gripping position is not within a threshold distance (e.g., 10 mm) to an antenna, the antenna transmission power mode may remain in non-TAS mode or exit TAS mode and enter non-TAS mode. For example, the non-TAS mode may be a partially restricted mode where the antenna is allowed to transmit at a reduced power, which is an intermediate power level between TAS mode and unrestricted mode. For example, the intermediate power level may be 3dBm less than the power level of the unrestricted mode. In some examples, the determined antenna transmission power mode may be applied to all antennas of device 400. In some examples, the antenna transmission power mode is determined individually for each antenna.

Table 5 is an exemplary truth table corresponding to an example of the flow chart of FIG. 13. When the image processor recognizes human presence within a threshold D distance away and the touch controller does not detect human presence, the antenna power management may apply TAS mode. Alternatively, the antenna power management may reduce antenna power by X amount (e.g., -3db) (i.e., apply a partial restricted mode) instead of applying TAS mode.

| Table 4 | | |
|---|---|---|
| Is there a person less than D centimeters away (e.g., within D centimeters in the field of view (FOV) from the camera)? | Is there a hand covering the antenna (e.g., touching, hovering over or near the edge, or gripping the device)? | Use TAS mode? |
| Yes | Yes | Yes |
| Yes | No | Yes (or partial restricted mode) |
| No | Yes | Yes |
| No | No | No |

The following examples pertain to various embodiments.

Example 1 may include a device including a processing circuitry coupled to storage, the processing circuitry configured to: determine whether there is human presence near a transmit antenna based on image information from a camera and/or based on touch information from one or more touch sensors; and determine a transmission power mode of the transmit antenna based on whether human presence is detected, wherein the transmission power mode enters a high throughput mode including maximum transmit antenna power when no human presence is determined.

Example 2 may include the device of Example 1 and/or some other example herein, wherein the transmission power mode enters a time-averaging specific absorption rate (TAS) mode or enters a reduced throughput mode including reduced transmit antenna power when human presence is determined.

Example 3 may include the device of Example 2 and/or some other example herein, wherein human presence near the transmit antenna is determined based on the image information and the touch information; and wherein the transmission power mode enters the TAS mode when human presence based on touch information is determined near the transmit antenna and the transmission power mode enters the reduced throughput mode when human presence based on image information is determined near the transmit antenna but human presence based on touch information is not determined near the transmit antenna.

Example 4 may include the device of Example 2 and/or some other example herein, wherein human presence near the transmit antenna is determined based on the image information and the touch information; and wherein the transmission power mode enters the TAS mode when human presence based on image or touch information is determined near the transmit antenna.

Example 5 may include the device of any one of Examples 2-4 and/or some other example herein, the processing circuitry is further configured to: receive touch information from an active contact sensing area including a touch screen panel and/or a non-active routing area including a plurality of routing lines electrically connected to the touch screen panel, wherein determining whether there is human presence near the transmit antenna includes determining a hand position based on the touch information.

Example 6 may include the device of Example 5 and/or some other example herein, wherein the hand position includes no hand detected or a hand contacting the touch screen panel, hovering over the touch screen panel, and/or gripping around the plurality of routing lines to the touch screen panel.

Example 7 may include the device of Example 6 and/or some other example herein, wherein the plurality of routing lines run along the transmit antenna and the touch information from the non-active routing area includes capacitance information of the plurality of routing lines in the non-active routing area.

Example 8 may include the device of Example 7 and/or some other example herein, wherein the processing circuitry is further configured to: determine the hand position is gripping around the plurality of routing lines when capacitance information exceeding a threshold is detected on a plurality of routing lines.

Example 8.1 may include the device of Example 8 and/or some other example herein, wherein a determination of the hand position is gripping around the plurality of routing lines when capacitance information exceeding a threshold is detected on each of the plurality of routing lines.

Example 9 may include the device of Example 7 and/or some other example herein, wherein the processing circuitry is further configured to: receive touch information from the non-active routing area including a second plurality of routing lines electrically connected to the touch screen panel, wherein the second plurality of routing lines run along a second transmit antenna and the touch information from the non-active routing area includes capacitance information of the second plurality of routing lines in the non-active routing area; and determine whether there is human presence near the second transmit antenna.

Example 10 may include the device of Example 9 and/or some other example herein, wherein the processing circuitry is further configured to: determine a proximity distance of a human from the camera based on the image information; and determine there is human presence near the transmit antenna when the proximity distance is less than a threshold distance.

Example 11 may include the device of Example 1 and/or some other example herein, the processing circuitry is further configured to: determine a proximity distance of a human from the camera based on the image information; and determine there is human presence near the transmit antenna when the proximity distance is less than a threshold distance.

Example 12 may include the device of Example 11 and/or some other example herein, the processing circuitry is further configured to: receive touch information from an active contact sensing area including a touch screen panel and/or a non-active routing area including a plurality of routing lines electrically connected to the touch screen panel, wherein determining whether there is human presence near the transmit antenna includes determining a hand position based on the touch information, wherein the hand position includes no hand detected or a hand contacting the touch screen panel, hovering over the touch screen panel, and/or gripping around the plurality of routing lines to the touch screen panel; and determine the transmission power mode enters the TAS mode when a hand is determined to be near the transmit antenna and the transmission power mode enters the reduced throughput mode when the proximity distance is less than the threshold distance but no hand is determined near the transmit antenna.

Example 13 may include the device of any one of Examples 1-12 and/or some other example herein, wherein the processing circuitry is a low-power co-processor.

Example 14 may include a method including: determining whether there is human presence near a transmit antenna based on image information from a camera and/or based on touch information from one or more touch sensors; and determining a transmission power mode of the transmit antenna based on whether human presence is detected, wherein the transmission power mode enters a high throughput mode including maximum transmit antenna power when no human presence is determined.

Example 14.1 may include the method of Example 14 and/or some other example herein, wherein the transmission power mode enters a time-averaging specific absorption rate (TAS) mode or enters a reduced throughput mode including reduced transmit antenna power when human presence is determined.

Example 14.2 may include the method of Example 14.1 and/or some other example herein, wherein human presence near the transmit antenna is determined based on the image information and the touch information.

Example 14.3 may include the method of Example 14.2 and/or some other example herein, wherein the transmission power mode enters the TAS mode when human presence based on touch information is determined near the transmit antenna and the transmission power mode enters the reduced throughput mode when human presence based on image information is determined near the transmit antenna but human presence based on touch information is not determined near the transmit antenna.

Example 14.4 may include the method of Example 14.1 and/or some other example herein, wherein human presence near the transmit antenna is determined based on the image information and the touch information; and wherein the transmission power mode enters the TAS mode when human presence based on image or touch information is determined near the transmit antenna.

Example 14.5 may include the method of any one of Examples 14.2-14.4 and/or some other example herein, further including: receiving touch information from an active contact sensing area including a touch screen panel and/or a non-active routing area including a plurality of routing lines electrically connected to the touch screen panel, wherein determining whether there is human presence near the transmit antenna includes determining a hand position based on the touch information.

Example 14.6 may include the method of Example 14.5 and/or some other example herein, wherein the hand position includes no hand detected or a hand contacting the touch screen panel, hovering over the touch screen panel, and/or gripping around the plurality of routing lines to the touch screen panel.

Example 14.7 may include the method of Example 14.6 and/or some other example herein, wherein the plurality of routing lines run along the transmit antenna and the touch information from the non-active routing area includes capacitance information of the plurality of routing lines in the non-active routing area.

Example 14.8 may include the method of Example 14.7 and/or some other example herein, further including: determining the hand position is gripping around the plurality of routing lines when capacitance information exceeding a threshold is detected on a plurality of routing lines.

Example 14.8.1 may include the method of Example 8 and/or some other example herein, wherein a determination of the hand position is gripping around the plurality of routing lines when capacitance information exceeding a threshold is detected on each of the plurality of routing lines.

Example 14.9 may include the method of Example 14.7 and/or some other example herein, further including: receiving touch information from the non-active routing area including a second plurality of routing lines electrically connected to the touch screen panel, wherein the second plurality of routing lines run along a second transmit antenna and the touch information from the non-active routing area includes capacitance information of the second plurality of routing lines in the non-active routing area; and determining whether there is human presence near the second transmit antenna.

Example 14.10 may include the method of Example 14.9 and/or some other example herein, further including: determining a proximity distance of a human from the camera based on the image information; and determining there is human presence near the transmit antenna when the proximity distance is less than a threshold distance.

Example 14.11 may include the method of Example 14.1 and/or some other example herein, further including: determining a proximity distance of a human from the camera based on the image information; and determining there is human presence near the transmit antenna when the proximity distance is less than a threshold distance.

Example 14.12 may include the method of Example 14.11 and/or some other example herein, further including: receiving touch information from an active contact sensing area including a touch screen panel and/or a non-active routing area including a plurality of routing lines electrically connected to the touch screen panel, wherein determining whether there is human presence near the transmit antenna includes determining a hand position based on the touch information, wherein the hand position includes no hand detected or a hand contacting the touch screen panel, hovering over the touch screen panel, and/or gripping around the plurality of routing lines to the touch screen panel; and determining the transmission power mode enters the TAS mode when a hand is determined to be near the transmit antenna and the transmission power mode enters the reduced throughput mode when the proximity distance is less than the threshold distance but no hand is determined near the transmit antenna.

Example 15 may include a non-transitory computer-readable medium storing computer-executable instructions which when executed by one or more processors result in performing operations included in any one of Examples 14-14.12.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc. Also, it is appreciated that particular implementations of hardware and/or software components are merely illustrative, and other combinations of hardware and/or software that perform the methods described herein are within the scope of the disclosure.

It is appreciated that implementations of methods detailed herein are exemplary in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

## Claims

1. A device comprising a processing circuitry coupled to storage, the processing circuitry configured to:
determine whether there is human presence near a transmit antenna based on image information from a camera and/or based on touch information from one or more touch sensors; and
determine a transmission power mode of the transmit antenna based on whether human presence is detected,
wherein the transmission power mode enters a high throughput mode including maximum transmit antenna power when no human presence is determined.

2. The device of claim 1, wherein the transmission power mode enters a time-averaging specific absorption rate (TAS) mode or enters a reduced throughput mode including reduced transmit antenna power when human presence is determined.

3. The device of claim 2, wherein human presence near the transmit antenna is determined based on the image information and the touch information; and
wherein the transmission power mode enters the TAS mode when human presence based on touch information is determined near the transmit antenna and the transmission power mode enters the reduced throughput mode when human presence based on image information is determined near the transmit antenna but human presence based on touch information is not determined near the transmit antenna.

4. The device of claim 2, wherein human presence near the transmit antenna is determined based on the image information and the touch information; and
wherein the transmission power mode enters the TAS mode when human presence based on image or touch information is determined near the transmit antenna.

5. The device of any one of claims 2-4, the processing circuitry is further configured to:
receive touch information from an active contact sensing area including a touch screen panel and/or a non-active routing area including a plurality of routing lines electrically connected to the touch screen panel,
wherein determining whether there is human presence near the transmit antenna includes determining a hand position based on the touch information.

6. The device of claim 5, wherein the hand position includes no hand detected or a hand contacting the touch screen panel, hovering over the touch screen panel, and/or gripping around the plurality of routing lines to the touch screen panel.

7. The device of claim 6, wherein the plurality of routing lines run along the transmit antenna and the touch information from the non-active routing area includes capacitance information of the plurality of routing lines in the non-active routing area.

8. The device of claim 7, wherein the processing circuitry is further configured to:
determine the hand position is gripping around the plurality of routing lines when capacitance information exceeding a threshold is detected on a plurality of routing lines,
wherein, preferably, a determination of the hand position is gripping around the plurality of routing lines when capacitance information exceeding a threshold is detected on each of the plurality of routing lines.

9. The device of claim 7, wherein the processing circuitry is further configured to:
receive touch information from the non-active routing area including a second plurality of routing lines electrically connected to the touch screen panel,
wherein the second plurality of routing lines run along a second transmit antenna and the touch information from the non-active routing area includes capacitance information of the second plurality of routing lines in the non-active routing area; and
determine whether there is human presence near the second transmit antenna.

10. The device of claim 9, the processing circuitry is further configured to:
determine a proximity distance of a human from the camera based on the image information; and
determine there is human presence near the transmit antenna when the proximity distance is less than a threshold distance.

11. The device of claim 1, the processing circuitry is further configured to:
determine a proximity distance of a human from the camera based on the image information; and
determine there is human presence near the transmit antenna when the proximity distance is less than a threshold distance.

12. The device of claim 11, the processing circuitry is further configured to:
receive touch information from an active contact sensing area including a touch screen panel and/or a non-active routing area including a plurality of routing lines electrically connected to the touch screen panel,
wherein determining whether there is human presence near the transmit antenna includes determining a hand position based on the touch information,
wherein the hand position includes no hand detected or a hand contacting the touch screen panel, hovering over the touch screen panel, and/or gripping around the plurality of routing lines to the touch screen panel; and
determine the transmission power mode enters the TAS mode when a hand is determined to be near the transmit antenna and the transmission power mode enters the reduced throughput mode when the proximity distance is less than the threshold distance but no hand is determined near the transmit antenna.

13. The device of any one of claims 1-12, wherein the processing circuitry is a low-power co-processor.

14. A method comprising:
determining whether there is human presence near a transmit antenna based on image information from a camera and/or based on touch information from one or more touch sensors; and
determining a transmission power mode of the transmit antenna based on whether human presence is detected,
wherein the transmission power mode enters a high throughput mode including maximum transmit antenna power when no human presence is determined,
wherein, preferably, the transmission power mode enters a time-averaging specific absorption rate (TAS) mode or enters a reduced throughput mode including reduced transmit antenna power when human presence is determined,
wherein, preferably, human presence near the transmit antenna is determined based on the image information and the touch information; and
wherein, preferably, the transmission power mode enters the TAS mode when human presence based on touch information is determined near the transmit antenna and the transmission power mode enters the reduced throughput mode when human presence based on image information is determined near the transmit antenna but human presence based on touch information is not determined near the transmit antenna.

15. A non-transitory computer-readable medium storing computer-executable instructions which when executed by one or more processors result in performing operations comprising claim 14.
